# EUROPEAN PATENT SPECIFICATION

(11) **EP 3 052 456 B1**
(45) Date of publication and mention of the grant of the patent: **02.02.2022**
(21) Application number: 14802144.7
(22) Date of filing: 01.10.2014
(51) Int. Cl.: C04B 41/00, C04B 41/72

(54) **METHOD FOR REMOVING SALTS AND NEGATIVE CHLORIDE IONS FROM POROUS MATERIALS**
VERFAHREN ZUR ENTFERNUNG VON SALZEN UND NEGATIVEN CHLORIONEN AUS PORÖSEN MATERIALIEN
PROCÉDÉ POUR ÉLIMINER LES SELS ET LES IONS CHLORURE NÉGATIFS DE MATÉRIAUX POREUX

(30) Priority: 02.10.2013 US 201361885526 P
(43) Date of publication of application: 10.08.2016
(73) Proprietor: Becor AS, 5039 Bergen (NO)
(72) Inventor: SÆLENSMINDE, Jan, N-5039 Bergen (NO)
(74) Representative: Onsagers AS
(86) International application number: PCT/IB2014/064980
(87) International publication number: WO 2015/049638

(56) References cited:
- EP-A1- 2 270 293
- WO-A1-89/08170

## Description

The invention relates to a method for removal of salts from porous materials, such as brick / cement / concrete, as defined in claim 1. Preferred embodiments of the invention are defined in the dependent claims.

A common way of removing salts from materials is to flood the surfaces with plain water in order to wash away the salts. The transport of the ions from the material will then be considered as the transport of ions towards liquid having lower concentrations of the ions in question in accordance with the laws of thermodynamics, such as Fick's law of diffusion, the Nernst-Plank equation, which is an extension of Fick's law of diffusion as it also includes movement of ions in electric fields, or the basic Einstein equations. These laws consider the movements of ions/particles based on their electric charge in electric fields, the potentials of the particles, the viscosity of the liquid, etc.

These laws apply when ions are dissolved in liquids, but apply to a lesser extent in the case of salt solutions in porous materials where the pores are only partly, and often barely, filled. The pore water consists always of salt solutions of varying ion concentrations locally in the pore system, and large quantities of the ions are fully or partially chemically bound in the material in the form of different salts (Friedel salts or other salts).

Other methods for extraction of salts are based on electrolysis between an external anode and the use of reinforcement or an installed rod on the opposite side as cathode. Electrochemical methods should be called ion extraction as the negative ions move towards the anode external to the material, whilst the positive ions are drawn towards the reinforcement. The free ions will move towards anode and cathode according to their electric charge.

Use of external anodes requires the anodes to be surrounded by ion-containing anode material, which means a great deal of installation and clean-up work, and also results in pollution. Moreover, the method requires the work area to be closed off, as the anode material may be hazardous to health.

The electrochemical methods are based on an anode being placed in inert material on the concrete surface. The anode is covered with a wet mass that acts as electrolyte for passing electricity from the anode into the concrete. A typical electrolyte is a liquid or cellulose material having electrolytic properties. Alternatively, ion-containing clays are used against the concrete surface, the anode being placed in the surface of this mass. Direct current is then applied between the anode and the reinforcement. The negative chloride ions migrate towards the positive anodes on the concrete surface.

If the electrolyte is not a liquid, the anode material must be wetted at regular intervals to prevent it from drying out, as the water molecules will migrate away from the anode towards the reinforcement.

WO 8908170 from the same inventor is an example of such a method where the intention was to carry out cycles of wetting by passing water along a mat placed on the concrete surface so as to wet the concrete. The liquid was then to be pumped out and dry hot air was to be pumped through the mat to dry out the concrete surface so that salts were drawn towards the surface. This was to be done in cycles in order to draw chloride ions near the surface out into the liquid, which was then drained off. The space between the sheeting and the concrete was then to be filled with an electrolyte. A voltage was then to be applied between the anode located in the mat and the reinforcement. The chloride ions near the reinforcement were then to migrate across the surface and out into the electrolyte.

The existing techniques for removing chloride ions/other ions require the anode on the concrete surface to be covered with electrolyte in the form of liquid or a mass having electrolytic properties. This made the methods very work-intensive and physically demanding.

The electrolyte material that has to be flushed away will be environmentally harmful, resulting in requirements having to be made with respect to collection and delivery to an approved disposal site.

EP 2270293 discloses a method for desalting a surface of a building comprising exposing the surface to steam for a predetermined period of time. EP 2270293 does not however teach cycles of supply of moist air and dry air.

### Brief description of the invention, salt extraction and removal of chloride ions

The present invention relates to a method and equipment that both carries salts (anions and cations) to the surface of porous materials and moves negative chloride ions away from the reinforcement in reinforced concrete structures.

The method uses only water, water vapour and air and causes no pollution. The invention relates to a method for transporting salts from the outermost 0-100 mm of porous materials towards and to the surface. The method utilises movements of ions in the pore water of the material, when salts pass from a weak solution to a higher concentration and into crystals and back. The method can be used to remove harmful salts, anions and cations, from porous building materials, as for instance concrete, plaster, mortar and masonry, such as clay brick and natural stone, with no embedded reinforcement, and to remove aggressive chloride ions from reinforcement in reinforced concrete structures.

The basic idea of the invention is that ions, which become an integral part of salts when their concentration increases, will move towards the evaporation zone in and on the surface. When the concentration of salts reaches saturation level in the evaporation zone, different salt crystals will be formed depending on the amount of crystal water that is still bound to the salt. Formation of salt crystals is completely dependent on the relative humidity in the surrounding air having a relative humidity below the equilibrium moisture content of the salt in question. If this is not the case, the salts will not release their crystal water and thus also not develop crystals which are crucial for the transport of further ions to the evaporation zone. The method is therefore based on it being possible to control the relative humidity in the air and the temperature so as to obtain optimal evaporation in relation to the ability of the crystal to release crystal water, and so that the drying out is not so intense that the film of water in the pores disappears since the ions move in this film of water. That salts are formed on the surface means that the concentration of both positive and negative ions will increase on the surface. On later supply of moisture and electrolysis, these ions will be incorporated as electrolyte according to another aspect of the invention.

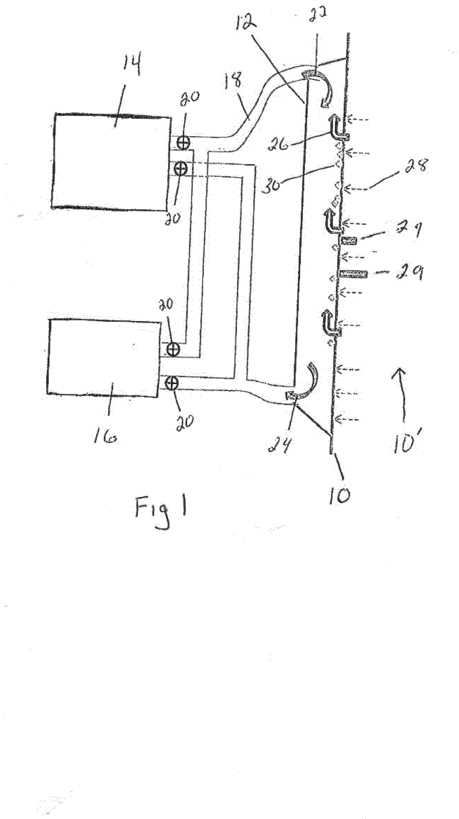

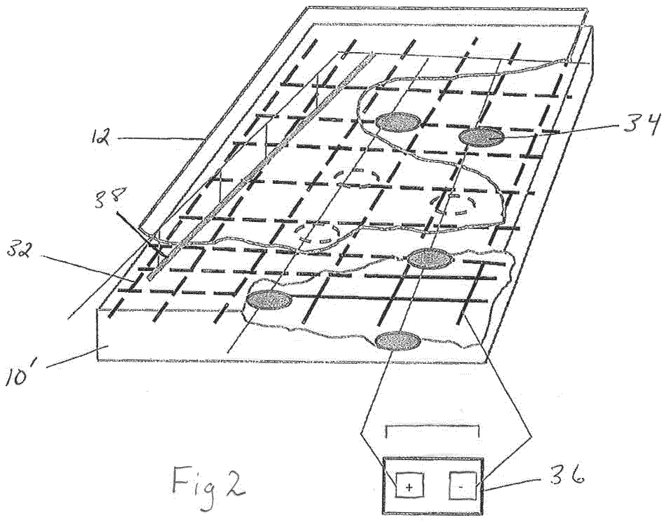

According to an exemplary embodiment, the invention can be executed using equipment that is shown in Fig. 1 to carry salts to the surface and for removal of negative chloride ions from reinforced concrete structures, and an alternative exemplary embodiment is shown in Fig. 2, where point and/or strip anodes are placed within the sheeting, as shown in Fig. 2.

The invention is based on the utilisation of knowledge regarding the equilibrium moisture content of the salts, what happens when water evaporates from a salt solution and the phase transitions through a weak solution towards a stronger solution, saturation, deposit of different salt crystals and the growth of such crystals.

If there is a porous material containing different salts and it is desired to remove/reduce parts of a specific salt, this can be done by controlling the relative humidity levels (RH) and temperature levels in the air under the sheeting.

### The effects

The properties of salts have different effects on materials.

Chloride salts in concrete lead to corrosion of reinforcement and to extensive damage during freezing/melting cycles in the course of late autumn, winter and early spring. Chloride salts are presumed to penetrate into concrete by diffusion/migration on the basis that different salt concentrations on the surface and deeper inside the concrete are sought to be evened out. Laws of thermodynamics are used to explain and estimate chloride penetration.

Other salts such as NaSO₄ break down the structure of concrete and stone and may result in extensive damage to concrete, plaster and stone structures. It may therefore be desirable to reduce the content of the ions that form NaSO₄.

In fields of science other than concrete technology and construction engineering, it is acknowledged that salts are transported over distances dissolved in water, in order then to accumulate where water evaporates, leaving an increased concentration of salts.

Examples of natural salt migration include:
a) It can be observed on the inside of heated basement rooms. Water containing different ions penetrates through the wall. Water evaporates from the inside surface and leaves salts on the surface.
b) If there is a bottle half full of a salt solution standing in a kitchen cupboard and there is a small leakage in the cork or cap. Slight evaporation will occur in the small leakage and salt crystals will be deposited around the small leakage and may cover the whole bottle cap. This crystal growth in the top of the bottle may occur even though it is perhaps 10cm down to the water surface in the bottle. This is because RH inside the bottle is in moisture equilibrium with the liquid in the bottle and when the salt concentration is below saturation, RH in the air will be higher than the equilibrium moisture content of the salt in question. Salts will not be deposited on the inside of the bottle as long as the salt concentration is lower than saturation.
c) A drop of salt solution on a glass slide. Evaporation from the drop takes place via the edge zones of the drop. As mentioned, the ions are transported to the evaporation zones. Where the drop is concerned, crystal growth will be seen along the outer edge of the drop until the drop has dried up completely.

The present invention manipulates salts in porous materials to migrate towards the surface by regulating relative humidity and temperature such that phase transitions occur from solution to crystals on and in the surface of salt-containing materials. The amount of different ions in a solution and the relative humidity determine what salts can be formed when water evaporates from the solution. For example, NaCl has an equilibrium moisture content at about 73% relative humidity and will not crystallise before the humidity in the air comes below 73% and the concentration of NaCl on the surface exceeds the saturation of NaCl in the solution. CaCl₂ has an equilibrium moisture content at around 33% relative humidity. That means to say that calcium chloride will not crystallise before the relative humidity in the surrounding air comes below about 33%.

According to own experiments with a concrete bar standing with only one surface in a salt solution, surrounded by air having about 33% RH, evaporation from the concrete surface will result in a mixture of NaCl and CaCl₂ working its way up along the concrete bar, and NaCl will crystallise some distance above the surface, whilst the CaCl₂ solution will work its way further up along the bar until an incipient crystallisation of CaCl₂ is seen some centimetres further up. The whole concrete bar appears wet also higher up than the NaCl crystals. When the moisture level is lowered to well below 33% RH, CaCl₂ will be crystallised several centimetres above the crystals of NaCl.

The same concrete bar placed in plain water will be subjected to all evaporation in the water surface and will not appear to be moist up along the bar.

This form of salt migration will be many times faster than a normal migration through plaster and concrete, which is said to follow Fick's second law.

The method is characterised in that moistening or wetting takes place by water-saturating the air to 90 - 100% RH, advantageously 95-100%, and preferably up to and including 100% RH, whilst increasing the temperature. Air having 100% RH contains about 17 g of water at 20 degrees Celsius. If the temperature is raised to about 30°C and 100% RH is obtained, the water volume per m³ will be over 50 g. When hot water-saturated air meets colder concrete or plaster surfaces, water will condense within the sheeting and on the material surfaces.

When the deposited salts are subjected to higher air humidity, they will draw moisture to themselves, but not return to their original position in the material.

The method is characterised by utilising movement of salts in the processes from solution to solid (crystals).

Salts in a porous material can be manipulated to move towards the surface by optimising drying out at the surface and immediately therebelow by regulating relative humidity and temperature in surrounding air and in the material.

Salts that are deposited on the surface or have moved further out in the material will draw back slightly into the material if the surface is wetted again (5-10 minutes) by supplying water-saturated air to the surface.

The invention is characterised in that the surface is subjected to wetting with water-saturated, hot air. The surface and the outermost layer is subsequently dried using dry air, with controlled humidity from 20% - 1% RH, more advantageously from 10% - 1%, and preferably down at 1% RH. Evaporation of water from the surface and immediately below the surface results in salts also further inside the materials migrating towards the evaporation zone and salts accumulating on and in the surface. When this process has been repeated a number of times, so much salt will be accumulated in the surface that it must be brushed off or flushed away using water.

If the material contains steel reinforcement or other electrically conducting materials that may corrode, the salts that are drawn to the surface may be used as electrolyte, and by using a rectifier and point anodes, a small rectified voltage can be applied between the anode and the reinforcement. The anode is configured such that its surface against the material surface covers less than 10% thereof. The conducting anode material is packed in a hygroscopic plastic mass in order to obtain electrical connection to the concrete surface. With oversaturated air under the mat, sufficient ions will be drawn out of the material and leached out in the anode material. An increase in the amount of free ions in the anode material will result in an increase in the passage of current and negative chloride ions will be drawn away from the reinforcement. The salts that are drawn out in the surface and towards the anode material are dissolved in water and thus form an electrolyte that is captured by the anodes and remains between anode and concrete.

When sufficient amounts of ions have been drawn out of the concrete to the anode, a constant voltage may be placed on the anode, whilst drying and wetting is repeated until the desired chloride level is reached.

The aforementioned process is repeated until the desired chloride level in the concrete cover is obtained.

This patent application does not utilise a supplied electrolyte in the form of liquid or wet paste. The inventive method uses only air and water vapour. This makes it possible to effect drying out of the surface without having to remove electrolytic liquid from the surface.

The method utilises only water vapour, and the electrolytic properties are supplied by using the ions that are drawn out of the building material through the cyclic process of wetting and drying.

This method avoids the use of environmentally harmful electrolytes that have to be removed.

The equipment for this method can therefore be installed without the use of heavy machinery and requires minimal cleaning after treatment.

Use of the method will also prompt a better understanding of the mechanisms that result in chlorides penetrating into concrete and of why damage occurs in concrete, plaster and stone when chloride salts and other salts are present on and in the concrete.

The invention will be described in more detail with reference to the figures, wherein:
Fig. 1 is a side view of a schematic representation of the invention;
Fig. 2 shows an exemplary embodiment with anodes.

As shown in Fig. 1, a piece of sheeting 12 is placed on top of a porous material having a surface 10 and an internal volume 10'. A space between the sheeting and the material is provided. Sealing is provided around the edges of the sheeting such that the space is closed, although with a small hole to prevent negative pressure behind the sheeting.

Hoses and pipes 18 are installed as shown, such that both an air humidifier 14 and an air dryer 16 are connected to the sheeting as shown. Valves 20 are able to regulate airflow, as indicated by the arrows 22 and 24.

The dryer and humidifier must be operated alternately. The surface is saturated with water from the water vapour from the air humidifier, and is dried off using dry air from the air dryer. Arrow 26 represents evaporation of water from the material surface. Arrow 28 represents direction of travel for salts during the drying process. Salt crystals 30 are formed on the surface 10. Humidity sensors 29 are drilled into the material to be able to measure relative humidity inside the material.

Another exemplary embodiment is shown in Fig. 2, for use with reinforced concrete, which includes steel reinforcement 32_in the material 10'. If it is desired to remove chloride ions from the surfaces of the reinforcement, one or more anodes 34 are mounted under the sheeting 12. The anode should preferably not cover more than 10% of the material surface under the sheeting. The anodes and steel reinforcement are connected to a power source 36. According to an aspect, the anodes are point anodes of inert anode, packed in a hygroscopic anode material. According to another exemplary embodiment, the anode is a line anode 38 of inert anode, packed in a hygroscopic anode material.

The invention will now be described in more detail by means of examples of various ways in which the method can be carried out.

### Example 1:

A material contains a mixture of CaCl and NaCl. It is desired to remove/reduce the NaCl content. In this case only an air humidifier and dryer with heating element are used.

A cycle may be:

| | |
|---|---|
| Point 1 Wetting: | 30 -360 minutes, advantageously 50-120 min, preferably 60 minutes of wetting using water-saturated water vapour such that relative humidity in incoming air is 90 -100%, preferably 100%. The temperature will fall when the air enters inside the sheeting. The air will thus give off moisture to the sheeting and material. Any moisture deposited on salts in the surface will leach out these salts and form a salt solution on the concrete surface. Running the process for 1 hour, for example, will allow the material to take up moisture. Wetting stops. |
| Point 2 Drying: | Dryer with heating element is started. Hot, dry air is sent through the hose and into the space towards the material. Relative humidity is measured in the air under the sheeting, and at two depths in humidity sensors that have been drilled into the material at 2 or more different depths. NaCl has an equilibrium moisture content at 73% RH at 20°C and CaCl has an equilibrium moisture content at about 32% RH If it is desired to move NaCl towards the surface, evaporation will be obtained at a relative humidity well below 72% RH, typically 45-60% RH and a temperature of between 30-35°C. It is not desirable to dry the pore system so much that the water in the pore walls disappears. The most sensible is to dry at about 50% RH and about 32°C. Na and Cl ions will now move towards the evaporation zones and the concentration of these ions will increase until local saturation. Crystals of NaCl will gradually be deposited on the surface. Drying takes place until it can be seen that the moisture level in the drilled-in measuring probes comes down towards 55-65% RH. |
| Such drying will take between 6 and 10 hours depending on, inter alia, the density of the material, external temperature and the amount of free salts in the material. In the case of NaCl, the heating element can be turned off for the last 2-3 hours of the drying period as the solubility of NaCl decreases rapidly when the temperature falls below about 28-32°C. If the temperature within the sheeting falls, a saturated NaCl solution on the surface will become supersaturated and will deposit further crystals as long as the moisture level within the sheeting is kept below 60% RH CaCl will not be deposited as crystals on the surface, but can be seen and felt as a rather sticky mass on the surface. This is CaCl with crystal water (CaCl +6H₂O). | |

If it is desired to move CaCl towards the surface, the relative humidity within the sheeting should be between 15 and 25% RH and the temperature 30-50°C.

It may now be elected to remove the sheeting and brush away NaCl crystals or to carry out a new wetting with water vapour as indicated in point 1.

Cycles of water-saturated air and drying with hot air having low relative humidity are repeated until the desired salt level in the surface has been obtained.

Table 1 shows ranges for relative humidity and temperature that are to be utilised when drying different salts. It can be seen that the solubility of individual salts varies greatly with temperature. As shown above, it may therefore be advantageous to lower the temperature towards the end of the drying periods, so that the solubility is reduced and further salt crystals can be precipitated as long as the solution in the surface is saturated. The numerical ranges mentioned are to include all intermediate ranges, e.g., 60-70 is to include 60-69, 60-65, , etc.

**Table 1. Relative humidity and temperature in the web during drying**

| Salt name | Chemical composition | Solubility Cold water | Solubility Warm water | Relative humidity over salt | **Range of RH when drying.** | **Range of temp. when drying. C°** |
|---|---|---|---|---|---|---|
| Gypsum | CaSO₄^{∗}2H₂O | 0.24 | 0.22 | 0.98 | **60-70** | **30-50** |
| Marabilite | NaSO₄^{∗}10H₂O | 11 | 92 | 0.93 | **55-70** | **40-60** |
| Thenardite | NaSO₄ | 30 | 43 | 0.83 | **45-65** | **30-50** |
| Calcium chloride | CaCl₂^{∗}6H₂O | 276 (59) | 536 (140) | 0.33 | **15-25** | **30-50** |
| Halite | NaCl | 36 | 39 | 0.76 | **45-60** | **30-35** |
| Bischofite sylvite | MgCl₂^{∗}6H₂O | 167 (52) | 367 | 0.33 | **15-25** | **35-45** |
| Sylvite | KCl | 35 | 57 | 0.85 | **50-70** | **30-35** |
| | **Alkalis in concrete** | | | | | |
| | Ca(OH)₂ | 0.18 | 0.077 | 0.92 | ------ | |
| | Mg(OH)₂ | 0.0009 | 0.004 | 0.98 | ---- | |
| | NaOH | 42 | 70 | 50 | **35-45** | |
| | KOH | 50 | 65 | 50 | **35-45** | |

It is important that the pores in the concrete do not dry completely as the free ions move in water films inside the pores. If the water dries up completely, the salt migration will stop.

### Example 2:

It is desired to remove chloride ions from a reinforced concrete structure.

The point and/or strip anodes are placed within the sheeting as shown in Fig. 2. The anodes cover at most 10% of the concrete surface area. The anodes are connected to the positive pole of a rectifier and the reinforcement is connected to the negative pole of the rectifier.

Point 1 wetting and point 2 drying, see Example 1, are run a desired number of times to generate salts on the surface and on the hygroscopic anodes. When, after wetting, a sufficient amount of free ions is formed on the concrete surface and on the anodes, the rectifier is switched on. A voltage of between 5 and 20 volts can be applied, depending on how much uncertainty there is as to the occurrence of hydrogen production and hydrogen embrittlement on the surface of the reinforcement. Moist air can be supplied continuously to prevent the anodes from drying out, or the rectifier may be run at constant voltage until the anodes are so dry that current does not pass between the anodes and the reinforcement.

Voltage between anode and reinforcement may be left on for a total of from 24 hours to 48 hours. Then the salts that have gathered on the surface can be brushed off, and points 1 and 2 as mentioned above can be carried out before a new period of applied voltage between anode and reinforcement is run.

It may also be elected to supply moisture (water vapour) continuously in the period of applied voltage. Nevertheless at some point in time new, free ions must be produced for the electrolyte. The processes are run until the desired level of chloride ions at the reinforcement is obtained.

### Testing of the method

The object of the test is to document that anions and cations inside a material move towards the surface when we subject the surfaces to the cyclic variations of temperature and relative humidity as described in our patent application. As chloride ions constitute a major part of the reason why embedded iron corrodes, we give weight to documentation of changes in the chloride content. A change in the amount of others ions in pore water can be documented, but this is more complicated to do.

We also wish to draw out both anions and cations to reduce the danger of other degradation mechanisms such as freezing/melting damage, alkali reactions and other mechanisms that can be related to free ions in the pore water.

### Test set-up

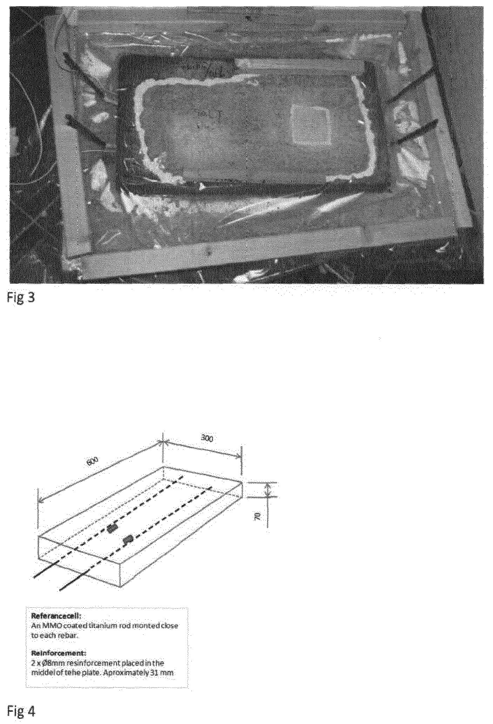

Concrete blocks as shown in Figure 3 were cast in February 2014. A reinforced concrete block with added sodium chloride and a concrete block without salt.

The concrete blocks are placed in a vessel containing dissolved sodium chloride. The concrete blocks are placed on small supports, such that the salt-containing liquid covers the whole of the underside and about 10mm up along the sides of the concrete block.

A plastic sheet where a hole has been cut in the plastic in an area on top of the concrete blocks is then placed over the salt vessel and over the concrete blocks. The plastic is then glued to the concrete surface around the hole so that the concrete in the hole is exposed to the air in the room. The plastic was then glued to the edges of the salt vessel.

Thus, we have a concrete bock partially submerged in a chloride salt solution with an opposite concrete surface exposed to air where we can regulate temperature and humidity.

Locally on the concrete surface, we used a grout to delimit an area of about 120x120mm to which we were able at intervals to supply moisture using water vapour. The other concrete surface was then exposed to air having a temperature varying between 20-35°C and relative humidity down at about 30-33%.

In addition, we have performed chloride measurement in a reference concrete stored at ordinary room temperature.

An outline of a reinforced concrete block with added sodium chloride, which is then placed partially submerged in a salt solution, is shown in Fig. 4. As reference cell an MMO-coated titanium rod is used.

Results after different external influences, including effect according to our application.

### Cyclic wetting and drying according to the application

The small area of 120x120mm was then subjected to the treatment that is covered by our patent application.

After about 15 cycles of rapid wetting and slow drying with low relative humidity level in the air. Includes brief flushing of the surface between each cycle.
- Result:: It can be seen that the chloride content (Cl) is reduced by about 64% at a depth of 0-5mm and by about 25% at a depth of 5-12mm, and it can be seen that there is no change at a depth of 12-20mm.

### Drying in a dry environment (stable drying)

A concrete sample with added sodium chloride that is partially immersed in a salt solution and where the opposite surface is subjected to constant drying.

Result: The chloride content will increase in and close to the surface as the evaporation zone for water is moved inwards in the material and the salt ions will be accumulated in the evaporation zone inside the material.

### Ordinary room temperature

A concrete sample with added sodium chloride that is stored in stable room temperature and relative humidity.

Result: The chloride content remains stable in the material and no movement of chloride ions in the material is registered.

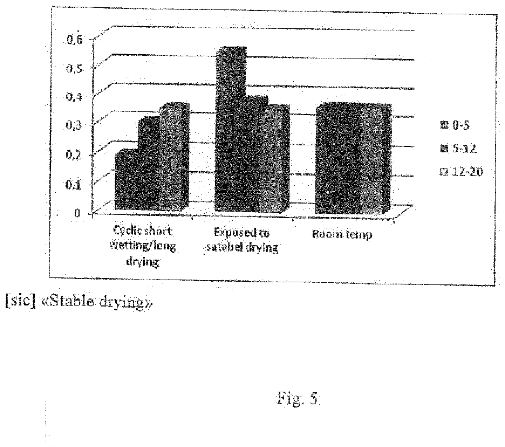

**A graphical presentation of chloride content at depths of 0-5mm, 5-12mm and 12-20mm after different exposure, is shown in** **fig. 5****.**
- Cyclic wetting and drying shows that the chloride content is reduced close to the surface.
- Stable drying will increase the chloride content close to the surface.
- A stable environment will not move the chloride ions.

In addition to measuring changes in chloride content at different depths, we have also measured electrical conductivity in the surface, on wetting with water vapour after a fairly long period of drying. Conductivity is then measured along a surface where two metal rods are pressed down against the surface. The conductivity is measured using alternating current of about 1000 Hz applied voltage.

It can then be seen that the surface with high chloride content takes up moisture quickly and rapidly gives good electrical conductivity in the surface.

A surface with reduced chloride content takes up moisture slowly and it takes a long time for the conductivity to increase.

The concrete block that is stored at room temperature takes up moisture as before, and increased conductivity on wetting with water vapour lies between the aforementioned surfaces.

This is also a strong indication that the amount of free ions in the concrete surface has been reduced by our treatment of wetting and drying.

## Claims

1. A method for removing salts from a porous material, including cyclic wetting and drying of the material surface, **characterised in that**
a. a salt it is desired to remove from the material is identified, along with its equilibrium moisture content;
b. a piece of sheeting is placed on the surface of the material, and the edges of the sheeting are sealed against the surface;
c. moist air is passed inside the sheeting until a desired moisture level is reached inside the material;
d. dry air is passed inside the sheeting, the relative humidity and temperature of the air chosen to avoid the complete drying of water inside the pores of the porous material;
e. cycles of supply of moist air and dry air are repeated until a desired amount of salt crystals is formed on the surface of the material;
f. the salt crystals are removed from the surface.

2. A method according to claim 1, **characterised in that** the dry air that is supplied has a relative humidity below the equilibrium moisture content of the identified salt.

3. A method according to claim 1, **characterised in that** cycles of supply of moist air and dry air are repeated until a desired amount of free ions is obtained.

4. A method according to claim 1, **characterised in that** humidity sensors are drilled into the material, and that the relative humidity inside the material is measured such that supply of dry air is continued until relative humidity in the material comes below the equilibrium moisture content of the salt.

5. A method according to one of the preceding claims, wherein the salt is NaCl, that air having a relative humidity of from 90%-100% is supplied for from 30-360 minutes, that dry air is supplied until the relative humidity of the air inside the sheeting falls below 72%.

6. A method according to one of the preceding claims, wherein the relative humidity of the air inside the sheeting is in range of 45 - 60%.

7. A method according to one of the preceding claims, wherein the relative humidity of the air inside the sheeting is 50%.

8. A method according to one of the preceding claims, wherein the dry air has a temperature of from 30-35 degrees C.

9. A method according to one of the preceding claims, wherein the drilled-in sensors show a relative humidity of 55-65%.

10. A method according to one of the preceding claims, wherein the salt is calcium chloride, and dry air is supplied until the relative humidity is between 15 -20% under the sheeting at an air temperature of 30 - 50 degrees C.

11. A method according to one of the preceding claims, wherein the salt is Gypsum, and dry air is supplied until the relative humidity is between 60 -70% under the sheeting at an air temperature of 30 - 50 degrees C.

12. A method according to one of the preceding claims, wherein the salt is mirabilite, and dry air is supplied until the relative humidity is between 55 -70% under the sheeting at an air temperature of 40 -60 degrees C.

13. A method according to one of the preceding claims, wherein the salt is Thenardite, and dry air is supplied until the relative humidity is between 55 -45% under the sheeting at an air temperature of 30 -50 degrees C.

14. A method according to one of the preceding claims, wherein the salt is Bischofite sylvite, and dry air is supplied until the relative humidity is between 15-25% under the sheeting at an air temperature of 35-45 degrees C.

15. A method according to one of the preceding claims, wherein the salt is Sylvite, and dry air is supplied until the relative humidity is between 50-70% under the sheeting at an air temperature of 30-35 degrees C.

16. A method according to one of the preceding claims, wherein the material includes steel reinforcement, **characterised in that**
a. An anode is placed on the surface of the material;
b. A power source is connected to the steel reinforcement and the anode;
c. The power source is switched on when a sufficient amount of salt has migrated to the surface of the material, such that the salt can act as an electrolyte between the anode and the steel reinforcement.

## Patentansprüche

1. Verfahren zur Entfernung von Salzen aus einem porösen Material, einschließlich Zyklen der Befeuchtung und Trocknung der Materialoberfläche, **dadurch gekennzeichnet, dass**
a. ein Salz, für das gewünscht wird, es aus dem Material zu entfernen, zusammen mit seinem Gleichgewichtsfeuchtigkeitsgehalt identifiziert wird;
b. ein Stück Folie auf der Oberfläche des Materials platziert wird und die Ränder der Folie gegen die Oberfläche abgedichtet werden;
c. feuchte Luft innerhalb der Folie zirkuliert wird, bis ein gewünschter Feuchtigkeitsgehalt innerhalb des Materials erreicht wird;
d. trockene Luft innerhalb der Folie zirkuliert wird, wobei die relative Feuchtigkeit und Temperatur der Luft so gewählt sind, dass das vollständige Trocknen des Wassers innerhalb der Poren des porösen Materials vermieden wird;
e. Zyklen der Zufuhr von feuchter Luft und trockener Luft wiederholt werden, bis sich eine gewünschte Menge an Salzkristallen auf der Oberfläche des Materials gebildet hat;
f. die Salzkristalle von der Oberfläche entfernt werden.

2. Verfahren nach Anspruch 1, **dadurch gekennzeichnet, dass** die trockene Luft, die zugeführt wird, eine relative Feuchtigkeit unter dem Gleichgewichtsfeuchtigkeitsgehalt des identifizierten Salzes aufweist.

3. Verfahren nach Anspruch 1, **dadurch gekennzeichnet, dass** Zyklen der Zufuhr von feuchter Luft und trockener Luft wiederholt werden, bis eine gewünschte Menge an freien Ionen erhalten wird.

4. Verfahren nach Anspruch 1, **dadurch gekennzeichnet, dass** Feuchtigkeitssensoren in das Material gebohrt werden und dass die relative Feuchtigkeit innerhalb des Materials derart gemessen wird, dass die Zufuhr von trockener Luft fortgesetzt wird, bis die relative Feuchtigkeit in dem Material unter dem Gleichgewichtsfeuchtigkeitsgehalt des Salzes liegt.

5. Verfahren nach einem der vorhergehenden Ansprüche, wobei es sich bei dem Salz um NaCl handelt, wobei Luft, die eine relative Feuchtigkeit von 90 %-100 % aufweist, 30-360 Minuten lang zugeführt wird, wobei trockene Luft zugeführt wird, bis die relative Feuchtigkeit der Luft innerhalb der Folie unter 72 % fällt.

6. Verfahren nach einem der vorhergehenden Ansprüche, wobei die relative Feuchtigkeit der Luft innerhalb der Folie in einem Bereich von 45-60 % liegt.

7. Verfahren nach einem der vorhergehenden Ansprüche, wobei die relative Feuchtigkeit der Luft innerhalb der Folie 50 % beträgt.

8. Verfahren nach einem der vorhergehenden Ansprüche, wobei die trockene Luft eine Temperatur von 30-35 Grad Celsius aufweist.

9. Verfahren nach einem der vorhergehenden Ansprüche, wobei die eingebohrten Sensoren eine relative Feuchtigkeit von 55-65 % zeigen.

10. Verfahren nach einem der vorhergehenden Ansprüche, wobei es sich bei dem Salz um Calciumchlorid handelt und trockene Luft zugeführt wird, bis die relative Feuchtigkeit zwischen 15-20 % unter der Folie bei einer Lufttemperatur von 30-50 Grad Celsius beträgt.

11. Verfahren nach einem der vorhergehenden Ansprüche, wobei es sich bei dem Salz um Gips handelt und trockene Luft zugeführt wird, bis die relative Feuchtigkeit zwischen 60-70 % unter der Folie bei einer Lufttemperatur von 30-50 Grad Celsius beträgt.

12. Verfahren nach einem der vorhergehenden Ansprüche, wobei es sich bei dem Salz um Mirabilit handelt und trockene Luft zugeführt wird, bis die relative Feuchtigkeit zwischen 55-70 % unter der Folie bei einer Lufttemperatur von 40-60 Grad Celsius beträgt.

13. Verfahren nach einem der vorhergehenden Ansprüche, wobei es sich bei dem Salz um Thenardit handelt und trockene Luft zugeführt wird, bis die relative Feuchtigkeit zwischen 55-45 % unter der Folie bei einer Lufttemperatur von 30-50 Grad Celsius beträgt.

14. Verfahren nach einem der vorhergehenden Ansprüche, wobei es sich bei dem Salz um Bischofit-Sylvin handelt und trockene Luft zugeführt wird, bis die relative Feuchtigkeit zwischen 15-25 % unter der Folie bei einer Lufttemperatur von 35-45 Grad Celsius beträgt.

15. Verfahren nach einem der vorhergehenden Ansprüche, wobei es sich bei dem Salz um Sylvin handelt und trockene Luft zugeführt wird, bis die relative Feuchtigkeit zwischen 50-70 % unter der Folie bei einer Lufttemperatur von 30-35 Grad Celsius beträgt.

16. Verfahren nach einem der vorhergehenden Ansprüche, wobei das Material Stahlarmierung beinhaltet, **dadurch gekennzeichnet, dass**
a. eine Anode auf der Oberfläche des Materials platziert wird;
b. eine Leistungsquelle mit der Stahlarmierung und der Anode verbunden wird;
c. die Leistungsquelle eingeschaltet wird, wenn eine ausreichende Menge an Salz zu der Oberfläche des Materials gewandert ist, sodass das Salz als ein Elektrolyt zwischen der Anode und der Stahlarmierung dienen kann.

## Revendications

1. Procédé pour éliminer les sels d'un matériau poreux, comprenant un mouillage et un séchage cycliques de la surface du matériau, **caractérisé en ce que**
a. un sel que l'on souhaite éliminer du matériau est identifié, ainsi que sa teneur en humidité à l'équilibre ;
b. un morceau de feuille est placé sur la surface du matériau, et les bords de la feuille sont scellés contre la surface ;
c. de l'air humide est passé à l'intérieur de la feuille jusqu'à ce qu'un niveau d'humidité souhaité soit atteint à l'intérieur du matériau ;
d. de l'air sec est passé à l'intérieur de la feuille, l'humidité relative et la température de l'air étant choisies pour éviter le séchage complet de l'eau à l'intérieur des pores du matériau poreux ;
e. des cycles de fourniture d'air humide et d'air sec sont répétés jusqu'à ce qu'une quantité souhaitée de cristaux de sel se forme sur la surface du matériau ;
f. les cristaux de sel sont éliminés de la surface.

2. Procédé selon la revendication 1, **caractérisé en ce que** l'air sec qui est fourni présente une humidité relative inférieure à la teneur en humidité à l'équilibre du sel identifié.

3. Procédé selon la revendication 1, **caractérisé en ce que** des cycles de fourniture d'air humide et d'air sec sont répétés jusqu'à ce qu'une quantité souhaitée d'ions libres soit obtenue.

4. Procédé selon la revendication 1, **caractérisé en ce que** des capteurs d'humidité sont percés dans le matériau, et **en ce que** l'humidité relative à l'intérieur du matériau est mesurée de sorte qu'une alimentation en air sec se poursuit jusqu'à ce que l'humidité relative dans le matériau soit inférieure à la teneur en humidité à l'équilibre du sel.

5. Procédé selon l'une des revendications précédentes, dans lequel le sel est NaCl, l'air ayant une humidité relative de 90 % à 100 % est fourni pendant 30 à 360 minutes, l'air sec est fourni jusqu'à ce que l'humidité relative de l'air à l'intérieur de la feuille tombe en dessous de 72 %.

6. Procédé selon l'une des revendications précédentes, dans lequel l'humidité relative de l'air à l'intérieur de la feuille est dans la plage allant de 45 à 60%.

7. Procédé selon l'une des revendications précédentes, dans lequel l'humidité relative de l'air à l'intérieur de la feuille est de 50 %.

8. Procédé selon l'une des revendications précédentes, dans lequel l'air sec a une température de 30 à 35 degrés C.

9. Procédé selon l'une des revendications précédentes, dans lequel les capteurs percés présentent une humidité relative de 55 à 65 %.

10. Procédé selon l'une des revendications précédentes, dans lequel le sel est du chlorure de calcium, et de l'air sec est fourni jusqu'à ce que l'humidité relative soit entre 15 et 20% sous la feuille à une température d'air de 30 à 50 degrés C.

11. Procédé selon l'une des revendications précédentes, dans lequel le sel est du gypse, et de l'air sec est fourni jusqu'à ce que l'humidité relative soit entre 60 et 70 % sous la feuille à une température de l'air de 30 à 50 degrés C.

12. Procédé selon l'une des revendications précédentes, dans lequel le sel est la mirabilite, et de l'air sec est fourni jusqu'à ce que l'humidité relative soit entre 55 à 70 % sous la feuille à une température d'air de 40 à 60 degrés C.

13. Procédé selon l'une des revendications précédentes, dans lequel le sel est la thénardite, et de l'air sec est fourni jusqu'à ce que l'humidité relative soit entre 55 et 45 % sous la feuille à une température d'air de 30 à 50 degrés C.

14. Procédé selon l'une des revendications précédentes, dans lequel le sel est la bischofite sylvite, et de l'air sec est fourni jusqu'à ce que l'humidité relative soit entre 15 et 25 % sous la feuille à une température d'air de 35 à 45 degrés C.

15. Procédé selon l'une des revendications précédentes, dans lequel le sel est la sylvite, et de l'air sec est fourni jusqu'à ce que l'humidité relative soit entre 50 et 70 % sous la feuille à une température d'air de 30 à 35 degrés C.

16. Procédé selon l'une des revendications précédentes, dans lequel le matériau comprend un renforcement en acier, **caractérisé en ce que**
a. une anode est placée à la surface du matériau ;
b. une source d'énergie est connectée au renforcement en acier et à l'anode ;
c. la source d'énergie est activée lorsqu'une quantité suffisante de sel a migré à la surface du matériau, de sorte que le sel peut jouer le rôle d'un électrolyte entre l'anode et le renforcement en acier.
